# EUROPÄISCHE PATENTSCHRIFT

(11) **EP 2 073 954 B1**
(45) Veröffentlichungstag und Bekanntmachung des Hinweises auf die Patenterteilung: **08.06.2011**
(21) Anmeldenummer: 07803120.0
(22) Anmeldetag: 31.08.2007
(51) Int. Cl.: B23Q 17/24, B23Q 11/00, B23D 59/00, F16P 3/14, B27G 19/04, B27G 19/02

(54) **WERKZEUGMASCHINENÜBERWACHUNGSVORRICHTUNG**
MACHINE TOOL MONITORING DEVICE
DISPOSITIF DE SURVEILLANCE DE MACHINE-OUTIL

(30) Priorität: 04.09.2006 DE 102006041758; 22.08.2007 DE 102007039565
(43) Veröffentlichungstag der Anmeldung: 01.07.2009
(73) Patentinhaber: Robert Bosch GmbH, 70442 Stuttgart (DE)
(72) Erfinder: MAHLER, Michael, 70771 Leinfelden-Echterdingen (DE); KRAPF, Reiner, 72770 Reutlingen (DE); BRAUN, Heiko, 70771 Leinfelden-Echterdingen (DE); GREEN, Robert, Elmhurst, Illinois 60126 (US); HEES, Alexander, Werner, 74321 Bietigheim-Bissingen (DE)
(86) Internationale Anmeldenummer: PCT/EP2007/059133
(87) Internationale Veröffentlichungsnummer: WO 2008/028871

(56) Entgegenhaltungen:
- EP-A- 1 061 487
- EP-A- 1 422 022
- EP-A- 1 514 656
- US-A- 5 436 613

## Beschreibung

### Stand der Technik

Die Erfindung geht aus von einer Werkzeugmaschinenüberwachungsvorrichtung nach dem Oberbegriff dos Anspruchs 1.

Aus der DE 102 61 791 A1 ist- eine Werkzeugmaschinenüberwachungsvorrichtung für eine Kreissäge bekannt. Diese weist eine Sensoreinheit zur Erzeugung und Erfassung eines elektromagnetischen Signals auf, welche in der Nähe eines Sägeblatts angeordnet ist. Ein Annähern eines Körperteils an das Sägeblatt kann durch des Signalspektrums detektiert werden.

Aus der EP 1422 022 A1 ist ein Sicherheitssystem für ein Elektrowerkzeug, insbesondere eine Tischkreissäge bekannt, welches im Falle einer Gefahrensituation mittels einer Aktuatorik in der Lage ist, eine Notabschaltung der Werkzeugmaschine vorzunehmen. Das System der EP 1 422 022 A1 einen oder mehrere Radarsensoren, die einen oder mehrere Sicherheitsbereiche überwachen. Wird ein Objekt im Sicherheitsbereich detektiert oder nähert sich ein Objekt mit einer erhöhten Geschwindigkeit dem Arbeitswerkzeug, so wir in eine Sicherheitsabschaltung des Elektrowerkzeuges vorgenommen, wenn Position und Annäherungsgeschwindigkeit vorgegebene Grenzwerte überschreiten.

### Vorteile der Erfindung

Die Erfindung geht aus von einer Werkzeugmaschinenüberwachungsvorrichtung mit einer Erkennungseinheit zur Erkennung einer Anwendungssituation bei einer Werkzungmaschine.

Es wird vorgeschlagen, dass zumindest ein Bauelement der Werkzeugmaschine als Reflektor für ein Sende- und/oder Empfangssignal der Erkennungseinheit dient, wodurch die Überwachung eines großen Bereichs der Werkzeugmaschine konstruktiv einfach erreicht werden kann.

Ferner wird vorgeschlagen, dass die Werkzeugmaschinenüberwachungsvorrichtung zumindest einen Ultrabreitband-Radarsensor aufweist. Es kann mit einer Nutzung von ultrabreitbandigen Signalen eine hohe Informationsdichte und dadurch eine effektive Überwachung erreicht werden. Unter einem "Ultrabreitband-Radarsensor" soll in diesem Zusammenhang insbesondere ein Radarsensor verstanden werden, mittels dessen ein ultrabreitbandiges Radarsignal erzeugt, gesendet, empfangen und/oder ausgewertet werden kann. Unter einem "ultrabreitbandigen (oder Ultra Wide Band oder UWB) Radarsignal" soll insbesondere ein elektromagnetisches Signal verstanden werden, welches ein Frequenzspektrum mit einer Mittenfrequenz im Frequenzbereich von 1 GHz bis 15 GHz und einer Frequenzbandbreite von zumindest 500 MHz aufweist. Insbesondere ist der Ultrabreitband-Radarsensor Bestandteil der Erkennungseinheit.

Außerdem wird vorgeschlagen, dass die Erkennungseinheit, insbesondere ein Ultrabreitband-Radarsensor der Erkennungseinheit, eine Positions- und/oder Geschwindigkeitsbestimmung ermöglicht, wodurch eine besonders hohe Genauigkeit in der Erkennung erreicht werden kann. Unter einer "Positionsbestimmung" soll insbesondere die Bestimmung der Position eines mittels der Werkzeugmaschinenüberwachungsvorrichtung überwachten Objekts relativ zu einem aktiven Objekt der Werkzeugmaschine, wie insbesondere relativ zu einem Werkzeug vorzugsweise in dessen angetriebenem Zustand, verstanden werden. Ferner soll unter einer "Geschwindigkeitsbestimmung" insbesondere die Bestimmung von zumindest einem Bewegungsmerkmal aus der Gruppe Bewegungsrichtung, momentaner Geschwindigkeitswert und momentaner Beschleunigungswert eines sich relativ zu einem aktiven Objekt der Werkzeugmaschine bewegenden Objekts verstanden werden.

In diesem Zusammenhang kann eine hohe Sicherheit erreicht werden, wenn die Positions- und/oder Geschwindigkeitsbestimmung eine Positions- und/oder Geschwindigkeitsbestimmung von menschlichem oder tierischem Gewebe ist. Insbesondere erfolgt diese Erkennung von menschlichem oder tierischem Gewebe mittels einer spektralen Auswertung eines ultrabreitbandigen Signals.

In einer bevorzugten Ausführung der Erfindung wird vorgeschlagen, dass das zumindest eine Bauelement der Werkzeugmaschine ein Werkstück bearbeitendes Element ist, wodurch ein besonders großer Überwachungsbereich in der direkten Umgebung eines Werkstück bearbeitenden Elements erreicht werden kann. In diesem Zusammenhang wird vorgeschlagen, dass das zumindest eine Bauelement der Werkzeugmaschine ein Sägeblatt oder ein Sägeband ist.

In einer vorteilhaften Weiterbildung der Erfindung wird vorgeschlagen, dass die Erkennungseinheit zumindest eine Antenne mit einer Sende- und/oder Empfangsrichtung aufweist, die auf das zumindest eine Bauelement gerichtet ist, wobei ein Auswertesignal mit einer hohen Intensität erreicht werden kann.

In einer weiteren Ausführung der Erfindung wird vorgeschlagen, dass die Erkennungseinheit zumindest zwei Sensoren aufweist, die in einer Werkzeugmaschinengrundeinbaustellung beiderseits einer Werkzeugmaschinenarbeitsfläche zum Platzieren eines Werkstücks angeordnet sind, wodurch ein Spannen eines großen Überwachungsbereichs konstruktiv einfach erreicht werden kann. Unter einer "Werkzeugmaschinengrundeinbaustellung" soll in diesem Zusammenhang eine Stellung verstanden werden, die bei der Anwendung der Werkzeugmaschine durch einen Endbenutzer unter vorschriftsgemäßen Anwendungsbedingungen vorliegt. Die Werkzeugmaschinenarbeitsfläche ist vorzugsweise als Auflagefläche zum Auflegen eines zu bearbeitenden Werkstücks ausgebildet, die in der Werkzeugmaschinengrundeinbaustellung horizontal ausgerichtet ist. Bei der Anordnung der Sensoren "beiderseits" der Werkzeugmaschinenarbeitsfläche sind die Sensoren vorzugsweise durch die Werkzeugmaschinenarbeitsfläche getrennt, wobei ein erster Sensor unterhalb und ein zweiter Sensor oberhalb der Werkzeugmaschinenarbeitsfläche angeordnet sind.

In einer vorteilhaften Weiterbildung der Erfindung wird vorgeschlagen, dass die Erkennungseinheit dazu vorgesehen ist, die dielektrische Konstante zumindest eines Mediums zu ermitteln, wodurch eine besonders genaue Materialerkennung erreicht werden kann.

Ferner wird vorgeschlagen, dass die Erkennungseinheit dazu vorgesehen ist, durch die Reflexion des Sende- oder Empfangssignals auf ein Werkstück die Werkstückdicke zu ermitteln, wodurch zusätzliche Mittel zur Erfassung der Werkstückdicke vorteilhaft eingespart werden können.

Zur Bestimmung der dielektrischen Konstante und/oder der Werkstückdicke wird vorgeschlagen, dass die Erkennungseinheit in zumindest einem Betriebsmodus zur Auswertung von zumindest einer Strahlung aus einer Gruppe von zumindest zwei Strahlungsanteilen dient, die aufgrund einer Reflexion eines Signals an zumindest zwei Schnittstellen eines Mediums voneinander räumlich getrennt sind.

Eine besonders effektive Erkennung kann erreicht werden, wenn die Werkzeugmaschinenüberwachungsvorrichtung, insbesondere die Erkennungseinheit, ein Antennenarray aufweist. Unter einem "Antennenarray" soll in diesem Zusammenhang insbesondere eine Gruppe von mehreren voneinander unterschiedlichen Antennen verstanden werden, die in Betrieb mittels einer gemeinsamen Signalerzeugungseinheit mit einem zu sendenden Signal gespeist werden. Zweckmäßigerweise weist das Antennenarray zumindest eine Ultrabreitband-Radar-Antenne auf.

Es kann die Genauigkeit bei einer Erkennung erhöht werden, wenn das Antennenarray als phasenvariables Antennenarray ausgebildet ist. Unter einem "phasenvariablen" Antennenarray soll in diesem Zusammenhang insbesondere ein Antennenarray verstanden werden, welchem zumindest ein Phasenverschiebungsmittel zugeordnet ist, welches zur Änderung zumindest einer relativen Phasenlage zwischen zwei Signalen, die von unterschiedlichen Antennen des Antennenarrays abgestrahlt werden, vorgesehen ist.

Eine hohe Flexibilität in der Gestaltung von Überwachungsfunktionen kann erreicht werden, wenn die Erkennungseinheit zumindest zwei Überwachungsbereiche zum Überwachen eines Anwendungsprozesses der Werkzeugmaschine festlegt.

Außerdem wird vorgeschlagen, dass den Überwachungsbereichen jeweils ein unterschiedlicher Betriebsmodus der Werkzeugmaschine zugeordnet ist, wodurch eine hohe Flexibilität in der Anwendung der Werkzeugmaschine erzielt werden kann.

In einer bevorzugten Ausgestaltung der Erfindung wird vorgeschlagen, dass zumindest einem der Überwachungsbereiche ein Warnmodus der Werkzeugmaschine zugeordnet ist. Dadurch können vorteilhaft bei Erkennung einer potentiell gefährlichen Anwendungssituation Vorschutzmaßnahmen eingeleitet werden, bevor ein Bediener sich in einer akuten Gefahr befindet.

In diesem Zusammenhang können ein vorteilhafter Warneffekt und eine hohe Sicherheit erreicht werden, wenn die Erkennungseinheit - im Zusammenwirken mit einer Werkzeugmaschinenantriebseinheit zum Antreiben eines Werkzeugs - zum Verlangsamen eines Werkzeugantriebs im Warnmodus vorgesehen ist.

In einer bevorzugten Ausbildung der Erfindung wird vorgeschlagen, dass zumindest einem der Überwachungsbereiche eine Sicherheitsabschaltung der Werkzeugmaschine zugeordnet ist, wodurch eine hohe Bediensicherheit der Werkzeugmaschine erreicht werden kann.

Ferner wird vorgeschlagen, dass die Erkennungseinheit es ermöglicht, eine Unterscheidung von menschlichem oder tierischem Gewebe einerseits und Holz oder Metall oder Kunststoffen andererseits zu treffen, wobei abhängig von der erkannten Materialart verschiedene Vorgänge eingeleitet werden können. Wird menschliches Gewebe erkannt, können Sicherheitsmaßnahmen eingeleitet werden. Wird ein zu bearbeitendes Werkstück erkannt, können Erfassungsvorgänge zum Charakterisieren eines Werkstückzustands, wie z.B. einer Feuchtigkeit, einer Dicke, einer Vorschubgeschwindigkeit usw., eingeleitet werden.

Vorteilhafterweise umfasst die Erkennungseinheit eine Recheneinheit, die dazu vorgesehen ist, die Anwendungssituation durch eine auf einer unscharfen und/oder neuronalen Logik basierende Auswertung von Kenngrößen zu erkennen. Mit Hilfe einer unscharfen Logik kann von der Recheneinheit anhand des erfassten Signals eine große und komplexe Informationsmenge schnell ausgewertet werden. Eine unscharfe Logik stellt insbesondere eine Logik dar, die dem Auftreten eines bestimmten Ereignisses einen Wahrscheinlichkeitswert im Intervall zwischen 0 (falsch) und 1 (wahr) zuordnet. Durch eine neuronale Logik können vorteilhafte Selbstlernfunktionen der Werkzeugmaschinenüberwachungsvorrichtung erreicht werden.

In einer vorteilhaften Weiterbildung der Erfindung wird vorgeschlagen, dass die Erkennungseinheit eine Datenbank aufweist, in welcher einem Satz von Kenngrößen eine Anwendungssituation zugeordnet ist. Es kann ein besonders schneller Erkennungsprozess einer Anwendungssituation vorteilhaft erreicht werden, indem eine Korrelation zwischen erfassten Kenngrößen und einer Anwendungssituation untersucht wird.

Ferner wird ein Verfahren zur Erkennung einer Anwendungssituation bei einem Anwendungsprozess einer Werkzeugmaschine vorgeschlagen, bei welchem zur Erkennung der Anwendungssituation wenigstens eine Kenngröße aus der Detektion von menschlichem oder tierischem Gewebe erfasst wird, wodurch eine hohe Sicherheit bei der Anwendung der Werkzeugmaschine erreicht werden kann.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Kreissäge mit einem Sägeblatt und einer Werkzeugmaschinenüberwachungsvorrichtung in einer Schnittansicht von vorne,
- Fig. 2: die Kreissäge aus Figur 1 in einer Draufsicht von oben,
- Fig. 3: eine schematische Darstellung der Werkzeugma- schinenüberwachungsvorrichtung,
- Fig. 4: ein von der Werkzeugmaschinenüberwachungsvor- richtung erzeugtes breitbandiges Signal in ei- ner Amplitude-Frequenz-Darstellung,
- Fig. 5: eine Datenbank der Werkzeugmaschinenüberwa- chungsvorrichtung,
- Fig. 6: die Bestimmung der Position und der Geschwin- digkeit einer Hand relativ zum Sägeblatt,
- Fig. 7: die Ermittlung der dielektrischen Konstante eines Werkstücks,
- Fig. 8: zwei verschiedene Überwachungsbereiche der Werkzeugmaschinenüberwachungsvorrichtung und
- Fig. 9: eine Paneelsäge mit der Werkzeugmaschinenüber- wachungsvorrichtung in einer Frontansicht.

### Beschreibung der Ausführungsbeispiele

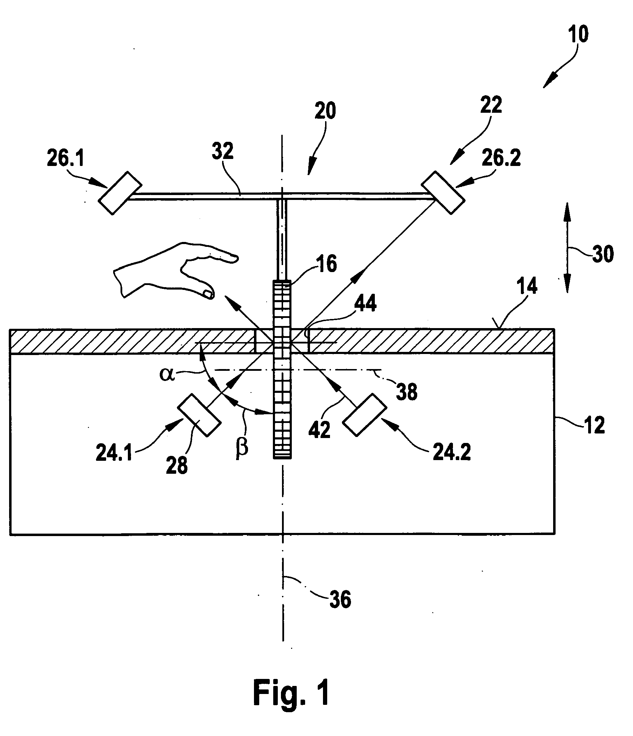

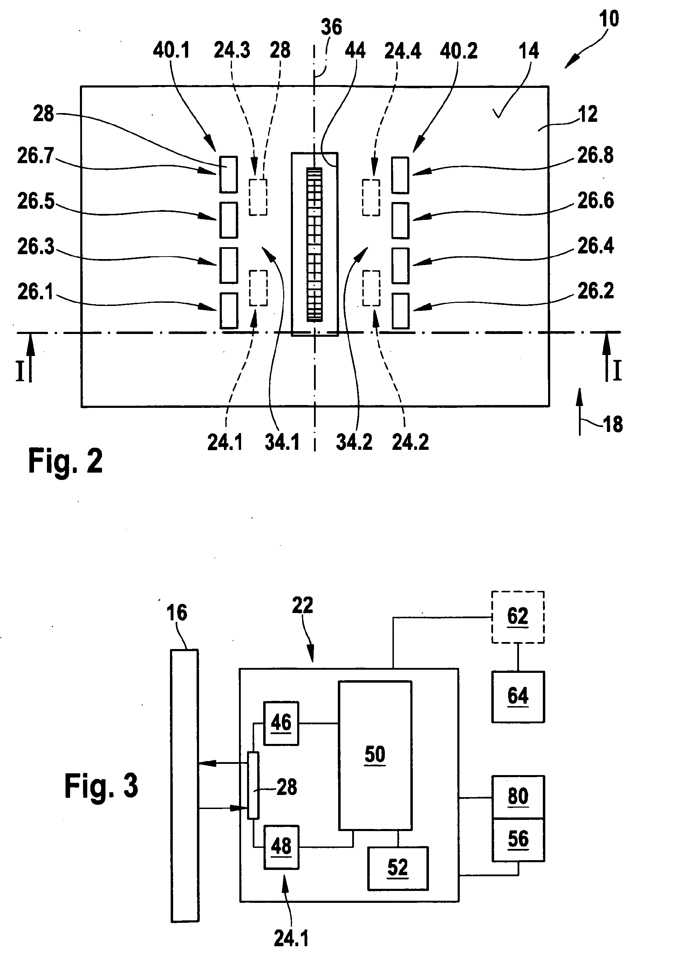

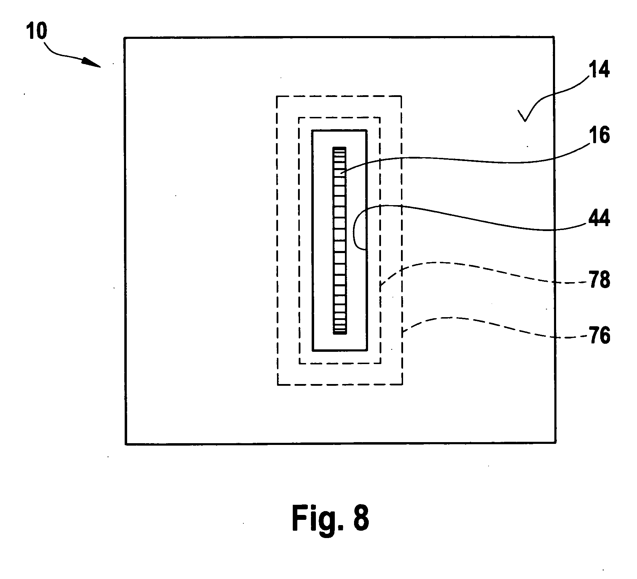

Figur 1 zeigt eine als Tischkreissäge ausgebildete Werkzeugmaschine 10 von vorne in einer Schnittansicht. Die folgende Beschreibung bezieht sich ferner auf die Figur 2, welche die Werkzeugmaschine 10 in einer Draufsicht von oben darstellt. Die Werkzeugmaschine 10 weist ein Gehäuse 12, eine Arbeitsfläche 14 zum Auflegen eines zu sägenden Werkstücks und ein als Werkstück bearbeitendes Element ausgebildetes Bauelement 16 auf. Insbesondere ist das Bauelement 16 als Sägeblatt ausgebildet. Alternativ kann das Bauelement 16 als Sägeband und oder als ein weiteres, dem Fachmann als sinnvoll erscheinendes Werkzeug ausgebildet sein. Die Werkzeugmaschine 10 ist in Figur 1 in deren Grundeinbaustellung gezeigt. Zum Bearbeiten eines Werkstücks wird hierbei das Werkstück auf die horizontal ausgerichtete Arbeitsfläche 14 aufgelegt und in einer horizontalen Arbeitungsrichtung 18 relativ zum Werkzeug 16 bewegt, die senkrecht zur Zeichnungsebene in Figur 1 ist. Die Werkzeugmaschine 10 ist ferner mit einer Werkzeugmaschinenüberwachungsvorrichtung 20 versehen, die eine Erkennungseinheit 22 zur Erkennung einer bei einer Anwendung der Werkzeugmaschine 10 auftretenden Situation aufweist. Insbesondere ist die Erkennungseinheit 22 auf das Erkennen des Vorhandenseins von menschlichem oder tierischem Gewebe in zumindest einem Überwachungsbereich (siehe Figur 8) ausgelegt.

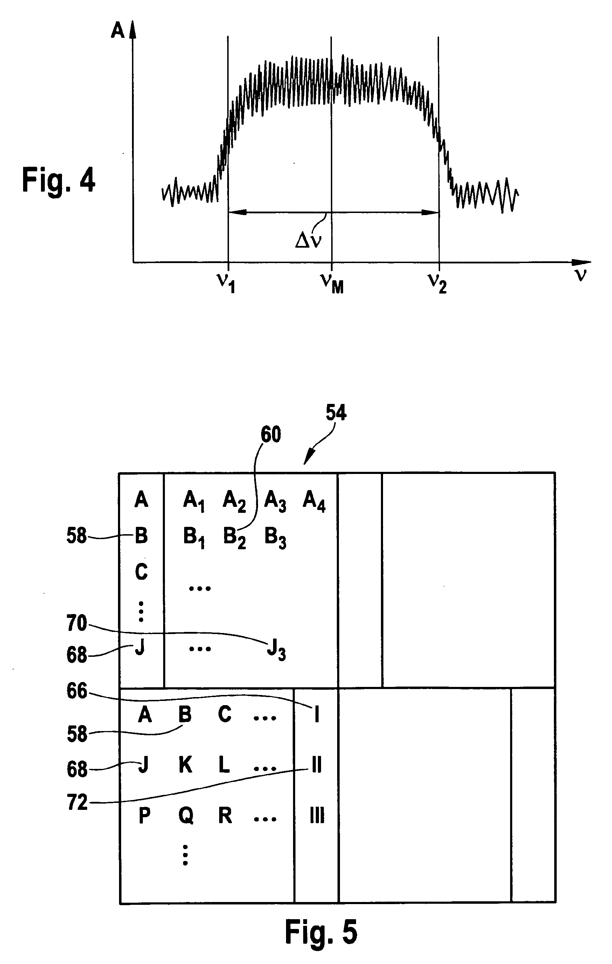

Hierzu ist die Erkennungseinheit 22 mit einer Mehrzahl von Sensoren 24, 26 versehen. Diese Sensoren 24, 26 sind jeweils als Ultrabreitband-Radarsensoren ausgebildet. Hierbei weisen die Sensoren 24, 26 jeweils zumindest eine Ultrabreitband-Antenne 28 auf, die zum Senden und/oder Empfangen eines in Figur 4 dargestellten Ultrabreitbandsignals vorgesehen ist. Die Sensoren 24 sind in der in Figur 1 dargestellten Grundeinbaustellung der Werkzeugmaschine 10 bezüglich der vertikalen Richtung 30 unterhalb der Arbeitsfläche 14 und insbesondere innerhalb des Gehäuses 12 angeordnet. Hierbei sind die Sensoren 24 von der Arbeitsfläche 14 in vertikaler Richtung nach oben bedeckt. Die Sensoren 26 sind in der Grundeinbaustellung oberhalb der Arbeitsfläche 14 angeordnet. Hierzu sind die Sensoren 26 mittels einer Haltevorrichtung 32 in ihrer die Arbeitsfläche 14 überstehenden Position gehalten. Die Projektionen der Sensoren 26 in vertikaler Richtung 30 nach unten auf die Arbeitsfläche 14 sind in diese Arbeitsfläche 14 eingebettet. Die unteren Sensoren 24 und die oberen Sensoren 26 sind beiderseits der Arbeitsfläche 14 angeordnet, d.h. die unteren Sensoren 24 sind von den oberen Sensoren 26 durch die Arbeitsfläche 14 voneinander getrennt.

Wie der Figur 2 zu entnehmen ist, bilden die Antennen 28 der Sensoren 24.1, 24.3 ein erstes Antennenarray 34.1 mit zwei Antennen 28, während die Antennen 28 der Sensoren 24.2, 24.4 ein zweites Antennenarray 34.2 mit zwei Antennen 28 bilden. Diese Antennenarrays 34.1, 34.2 sind beiderseits einer Bewegungsebene 36 des als Werkzeug ausgebildeten Bauelements 16 unterhalb der Arbeitsfläche 14 angeordnet. In diesem Beispiel entspricht die Bewegungsebene 36 der Rotationsebene des Bauelements 16. Diese enthält den Schwerpunkt des Bauelements 16 und ist senkrecht zu einer Rotationsachse 38 des Bauelements 16 ausgerichtet. Die Antennen 28 der Sensoren 26.1, 26.3, 26.5 und 26.7 bilden ein drittes Antennenarray 40.1 mit vier Antennen 28, während die Antennen 28 der Sensoren 26.2, 26.4, 26.6 und 26.8 ein viertes Antennenarrays 40.2 mit vier Antennen 28 bilden. Die Antennenarrays 40.1, 40.2 sind oberhalb der Arbeitsfläche 14 und beiderseits der Bewegungsebene 36 angeordnet. Die Antennenarray 40.1, 40.2 sind ferner jeweils in einem Bereich seitlich des Bauelements 16 angeordnet. Unter einer Anordnung "seitlich" des Bauelements 16 soll die Anordnung, insbesondere die vollständige Einbettung in einem Halbraum verstanden werden, der durch die Bewegungsebene 36 des Bauelements 16 begrenzt ist. Es ist ferner denkbar, dass die Sensoren 24, 26 selbst als Antennenarrays ausgebildet sind.

Die Erkennungseinheit 22 weist Sensoren 24, 26 auf, die in der Werkzeugmaschinengrundeinbaustellung, wie oben beschrieben, beiderseits der Arbeitsfläche 14 angeordnet sind, wie z.B. die Sensoren 24.1 und 26.1. Die Antennen 28 weisen jeweils eine Sende- und/oder Empfangsrichtung 42 auf, die auf das als Werkzeug ausgebildete Bauelement 16 gerichtet ist. Hierbei bildet diese Richtung 42 mit der horizontalen Arbeitsfläche 14 und mit der vertikal ausgerichteten Bewegungsebene 36 einen spitzen Winkel α bzw. β, wobei die Summe der Winkel α und β vorzugsweise einem Winkel von 90° entspricht. Bei einem Senden eines Sendesignals durch eine Antenne 28 entspricht die Senderichtung 42 vorzugsweise einer Richtung, in welcher das Sendesignal mit der höchsten Intensität gestrahlt wird. Bei einem Empfangen eines Empfangssignals entspricht die Empfangsrichtung 42 vorzugsweise einer Richtung, in welcher die Antenne 28 die größte Empfangssensibilität aufweist. Die Ausrichtung der Sende- und/oder Empfangsrichtung 42 kann durch eine angepasste Ausrichtung der entsprechenden Antenne 28 relativ zur Arbeitsfläche 14 festgelegt werden, und/oder es kann für einen Sensor 24, 26 eine optische Einheit vorgesehen sein, die zum Bündeln einer Strahlung dient. Beispielsweise kann die Sende- und/oder Empfangsrichtung 42 einer optischen Achse der optischen Einheit entsprechen. Im betrachteten Fall sind die Antennenarrays 34, 40 als phasenvariable Antennenarrays ausgebildet. Hierbei können innerhalb eines Antennenarrays 34, 40 relative Phasenlagen zwischen Sendesignalen, die von den einzelnen, das entsprechende Antennenarray 34, 40 bildenden Antennen 28 erzeugt werden, gesteuert werden. Es kann hierbei mittels konstruktiver und/oder destruktiver Interferenzen ein Sendesignal zur Strahlung in einer bevorzugten Senderichtung 42 gebündelt werden. Die Steuerung der relativen Phasenlagen erfolgt mittels nicht näher dargestellter Phasenverschiebeelemente.

Mit der in Figur 1 gezeigten Ausrichtung der Sende- und/oder Empfangsrichtung 42 wird das als Werkzeug ausgebildete Bauelement 16 als Reflektor für ein Sende- und/oder Empfangssignal der Erkennungseinheit 22 genutzt. Beispielsweise wird von einer Antenne 28 unterhalb der Arbeitsfläche 14 vom Innenraum der Werkzeugmaschine 10 ein Sendesignal auf das Bauelement 16 gerichtet. Das Sendesignal wird vorzugsweise auf einen Reflexionspunkt am Bauelement 16 gerichtet, der im Bereich eines für das Bauelement 16 vorgesehenen Spalts 44 in der Arbeitsfläche 14 angeordnet ist, und gelangt, durch den schrägen Einfallswinkel auf das Bauelement 16 bedingt, in den Halbraum oberhalb der Arbeitsfläche 14, in welchem es an einem Objekt, wie z.B. einem Werkstück oder an einer Hand eines Bedieners, reflektiert oder abgelenkt werden kann. Beispielsweise kann das Sendesignal auf eine sich im nahen Bereich des Bauelements 16 befindende Hand eines Bedieners reflektiert und dabei auf das Bauelement 16 zurück gerichtet werden. Nach erneuter Reflexion am Bauelement 16 wird es als Empfangssignal von einem Sensor 24 und/oder 26 empfangen.

Mittels der Erkennungseinheit 22 können verschiedene Überwachungsfunktionen bei einer Bearbeitung eines Werkstücks realisiert werden. Der Aufbau und die Funktionsweise der Erkennungseinheit 22 sind in Figur 3 erläutert.

Figur 3 zeigt die Werkzeugmaschinenüberwachungsvorrichtung 20 mit der Erkennungseinheit 22 und das als Werkzeug ausgebildete Bauelement 16 der Werkzeugmaschine 10. Der Übersichtlichkeit halber wird in der Erkennungseinheit 22 lediglich der Sensor 24.1 dargestellt. Zum Senden bzw. Empfangen eines Signals ist, wie oben beschrieben, der Sensor 24.1 mit einer Ultrabreitband-Antenne 28 versehen. Das zu sendende Signal (siehe Figur 4) wird in einer für einen ultrabreitbandigen Betrieb vorgesehenen Signalerzeugungseinheit 46 des Sensors 24.1 erzeugt und auf die Antenne 28 gegeben. Nach einem Empfangen eines Signals durch die Antenne 28 wird dieses in einer Signalaufbereitungseinheit 48 gefiltert, verstärkt, in eine digitale Form umgewandelt und anschließend auf eine Recheneinheit 50 der Erkennungseinheit 22 zur Verarbeitung gegeben. Die Erkennungseinheit 22 weist ferner eine Speichereinheit 52 auf, in der eine Datenbank 54 mit Überwachungsinformationen gespeichert wird. Diese Datenbank 54, deren Funktion unten beschrieben wird, kann mit Hilfe einer Eingabeeinheit 56 von einem Endbenutzer oder bei einer Werkeinstellung programmiert werden. Die Recheneinheit 50 weist vorzugsweise zumindest einen Mikroprozessor auf oder sie kann als Mikroprozessor ausgebildet sein.

In Figur 4 ist das Spektrum eines am Eingang einer der Antennen 28 angelegten Sendesignals dargestellt, wobei eine Amplitude A auf der Y-Achse und eine Frequenz ν auf der X-Achse aufgetragen sind. Das Sendesignal wird mit einer Mittenfrequenz ν_{M} von 5 GHz und einer Signalbandbreite Δν von 2 GHz um diese Mittenfrequenz ν_{M} übertragen. Dabei beträgt eine Unterfrequenz ν₁ = 4 GHz und eine Oberfrequenz ν₂ = 6 GHz. Beispielsweise kann das Sendesignal mittels der Erzeugung von Pulsen hergestellt werden, wobei die Pulse jeweils mit einer Pulsdauer im Nanosekundenbereich übertragen werden und regelmäßig aufeinander folgen. Weitere, dem Fachmann als sinnvoll erscheinende Erzeugungsverfahren von ultrabreitbandigen Signalen sind denkbar.

Figur 5 zeigt die in der Speichereinheit 52 gespeicherte Datenbank 54. Mittels der Datenbank 54 kann die Recheneinheit 50 einem erfassten Empfangssignal eine Anwendungssituation 58 zuordnen, die z.B. dem Auflegen eines Werkstücks auf die Arbeitsfläche 14 entspricht. In der Datenbank 54 sind in einer Zuordnungstabelle Signalmuster, z.B. A₃, B₂ usw., jeweils einer Anwendungssituation A bzw. B usw. zugeordnet. Insbesondere ermöglicht es die Erkennungseinheit 22, eine Unterscheidung von menschlichem oder tierischem Gewebe einerseits und Holz oder Metall oder Kunststoff andererseits zu treffen. Diese verschiedenen Anwendungssituationen unterscheiden sich durch ein jeweils unterschiedliches Spektrum eines empfangenen Signals. Diese charakteristischen Spektren, die jeweils eine Signatur für ein bestimmtes Material darstellen, sind als Signalmuster A₁, B₂ usw. in der Datenbank 54 gespeichert. Ausgehend vom erfassten Empfangssignal untersucht die Recheneinheit 50 eine Korrelation zwischen dem Empfangssignal und den Signalmustern, bis ein Signalmuster 60, welches die größte Korrelation mit dem erfassten Empfangssignal aufweist, bestimmt wird. Die Bestimmung des passenden Signalmusters 60 wird mittels einer Methode der Fuzzy-Logik (unscharfe Logik) durchgeführt. In der Datenbank 54 sind in einer weiteren Zuordnungstabelle Anwendungssituationen A, B, C usw. Vorgehensweisen I, II, III usw. für die Werkstückbearbeitung zugeordnet. Wenn eine Anwendungssituation von der Recheneinheit 50 erkannt wird, kann auf diese Anwendungssituation reagiert werden, indem eine Aktorikeinheit 62 (siehe Figur 3), welche zur Durchführung von Sicherheitsmaßnahmen vorgesehen ist und mit der Erkennungseinheit 22 verbunden ist, dem Vorgehen entsprechend einen Verlauf der Werkstückbearbeitung ggf. modifiziert. Die Aktorikeinheit 62 steht hierbei in Wirkverbindung mit einer Antriebseinheit 64 (siehe Figur 3), die zum Antreiben des Bauelements 16 vorgesehen ist, und/oder sie dient zum Antreiben von nicht näher dargestellten Sicherungsmitteln, die zum Schutz des Bedieners vorgesehen sind. Im betrachteten Beispiel ist die Anwendungssituation 58 einem Vorgehen 66 zugeordnet, das in der Datenbank 54 dem Eintrag I entspricht. Bei diesem Vorgehen 66 wird z.B. der Betrieb der Werkzeugmaschine 10 unverändert fortgesetzt.

Es wird ferner angenommen, dass ein Finger des Bedieners dem angetriebenen Bauelement 16 angenähert wird. Dies widerspiegelt sich im Spektrum des Empfangssignals u.a. durch multiple Resonanzfrequenzen, die das menschliche Gewebe charakterisieren. Diese Anwendungssituation ist als Anwendungssituation 68 bezeichnet, die von der Recheneinheit 50 anhand des erfassten Empfangssignals durch die Bestimmung eines korrelierten Signalmusters 70 erkannt wird. In der Datenbank 54 ist der Anwendungssituation 68 ein Vorgehen 72 zugeordnet, in dem der Antrieb des Bauelements 16 abgeschaltet wird.

Mittels der Eingabeeinheit 56 kann ein Bediener eine Konfiguration der Datenbank 54 durchführen. Der Bediener kann insbesondere die Datenbank 54 an neue Anwendungen der Werkzeugmaschine 10 anpassen, z.B. bei dem Einsatz von weiteren Sägemitteln oder neuartigem Zubehör, und/oder er kann neue Vorgehensweisen einstellen, die bestimmten Anwendungssituationen zugeordnet sind. Zur Erweiterung der Datenbank 54 mit neuen Anwendungssituationen und neuen Vorgehensweisen für diese Anwendungssituationen ist ein Lernmodus der Werkzeugmaschine 10 vorgesehen. In diesem Modus können Anwendungssituationen von dem Bediener absichtlich geschaffen werden, wobei die Recheneinheit 50 selbständig lernen kann, solche Anwendungssituationen zu erkennen und zu ermitteln, welche Vorgehensweisen diesen Anwendungssituationen angepasst sind. Dabei lernt die Recheneinheit 50, diese Anwendungssituationen jeweils mit einem oder mehreren Signalmustern zu korrelieren. Hierzu arbeitet die Recheneinheit 50 in diesem Modus auf der Basis einer neuronalen Logik, die eine solche Selbstlernfunktion erlaubt.

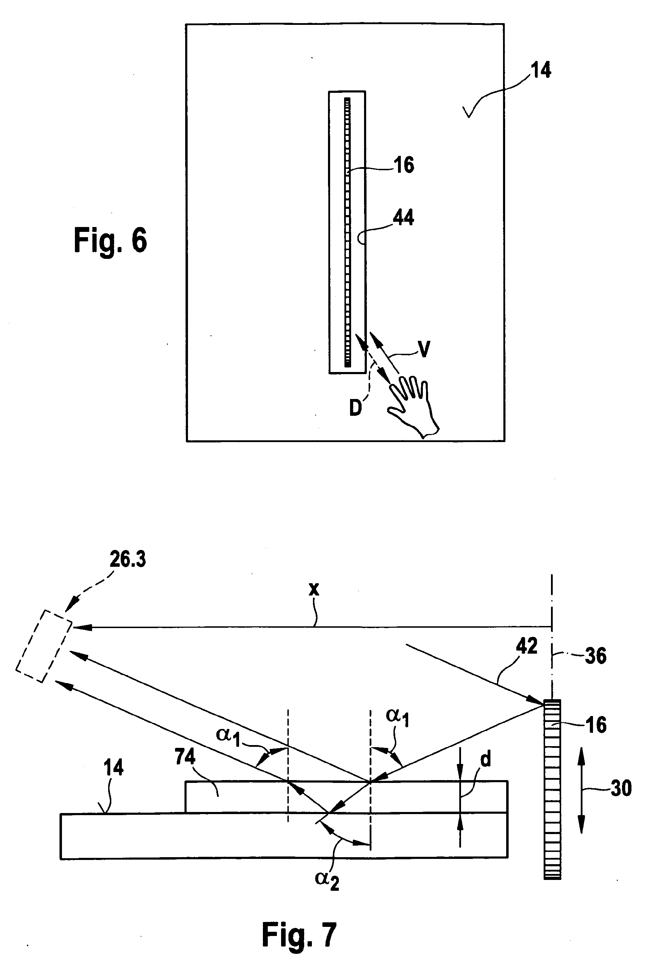

Mittels der Recheneinheit 50 kann ferner die Position eines erkannten Objekts relativ zum Bauelement 16 und insbesondere der Abstand zum Bauelement 16 bestimmt werden. Dies ist in der Figur 6 dargestellt. Hierzu kann die Recheneinheit 50 zur Bestimmung eines Abstands D zwischen einer erkannten Hand und dem Bauelement 16 eine Laufzeit zwischen der Erzeugung eines Sendesignals und dem Empfang des entsprechenden Empfangssignals erfassen, wie z.B. durch Durchführung einer Phasenlagenauswertung. Durch eine Auswertung von Frequenz- und/oder Phasenverschiebungen zwischen dem Sendesignal und dem Empfangssignal kann eine Geschwindigkeit V, mit der sich die Hand relativ zum Bauelement 16 bewegt, überwacht werden.

Die Benutzung des als Werkzeug ausgebildeten Bauelements 16 als Reflektor ermöglicht ferner die Bestimmung der dielektrischen Konstante eines auf der Arbeitsfläche 14 aufgelegten Mediums. Dies ist schematisch in Figur 7 dargestellt. Hierbei wird von einem der oberen Sensoren 26 ein Sendesignal mit der schrägen Senderichtung 42 auf das Bauelement 16 gerichtet. Im betrachteten Beispiel wird angenommen, dass das Sendesignal von einem der Sensoren 26.1, 26.3, 26.5, 26.7 gesendet wird. Nach einer Reflexion auf das Bauelement 16 bildet die Richtung des Sendesignals in einer vertikalen Ebene, die der Zeichnungsebene entspricht, einen Winkel α₁ mit einer vertikal ausgerichteten Normale zur Werkstückoberfläche. Ein Teil des Sendesignals wird an einer ersten Schnittstelle zwischen Luft und Werkstück 74 reflektiert, während ein Teil durch das Werkstück 74 transmittiert wird. Hierbei bildet der transmittierte Strahl einen Winkel α₁ mit der gleichen Normale zur Werkstückoberfläche. Dieser transmittierte Strahlungsteil wird an einer zweiten Schnittstelle des Werkstücks 74 zur Arbeitsfläche 14 reflektiert. Die Position der Sensoren 26, und zwar beispielsweise der horizontale Abstand X des Sensors 26.3 zur Bewegungsebene 36 ist derart gewählt, dass lediglich der Strahlungsanteil erfasst wird, der an der ersten Schnittstelle reflektiert wird. Hierdurch kann der Reflexionsfaktor des Mediums des Werkstücks 74 bestimmt werden. Mittels der Bestimmung des Reflexionsfaktors bei unterschiedlichen Polarisationen des Sendesignals kann die dielektrische Konstante des Mediums des Werkstücks 74 ermittelt werden. Dies erfolgt mittels der Recheneinheit 50 der Erkennungseinheit 22. Es ist ferner möglich, den Sensor 26.3 in einer horizontalen Richtung senkrecht zur Bewegungsebene 36 derart zu verschieben, d.h. den Abstand X derart zu wählen, dass der Sensor 26.3 den Strahlungsanteil erfasst, der an der zweiten Schnittstelle reflektiert wird. Durch die Bestimmung des Verschiebabstands können der Winkel α₂ und daher die Dicke d des Werkstücks 74 ermittelt werden. Dies wird wiederum mithilfe der Recheneinheit 50 der Erkennungseinheit 22 ermittelt. Alternativ oder zusätzlich ist der Einsatz einer Antenne 28 für den Sensor 26.3 denkbar, die einen Empfangswinkel aufweist, der die Erfassung beider Strahlungsanteile ermöglicht. Hierbei kann das Sendesignal als gepulstes Sendesignal ausgebildet sein, wobei mittels einer Laufzeiterfassung des Sendesignals zwischen den beiden Strahlungsanteilen unterschieden werden kann. Es ist ferner der Einsatz eines Antennenarrays denkbar, wobei die einzelnen Antennen des Antennenarrays jeweils zur gezielten Erfassung eines der Strahlungsanteile ausgelegt sind, wodurch wiederum zwischen den beiden Strahlungsanteilen unterschieden werden kann.

Durch die Mehrzahl der Antennen 28 und deren verteilte Anordnung um das Bauelement 16 können flexibel mehrere Überwachungsbereiche der Werkzeugmaschine 10 durch die Erkennungseinheit 22 festgelegt werden. Dies ist in Figur 8 dargestellt, welche die Werkzeugmaschine 10 in einer Draufsicht von oben darstellt. Die Erkennungseinheit 22 legt zwei Überwachungsbereiche 76, 78 fest. Die Projektionen der Überwachungsbereiche 76, 78 in vertikaler Richtung 30 nach unten auf die Arbeitsfläche 14, die den Begrenzungen der Überwachungsbereiche 76, 78 in der Arbeitsfläche 14 entsprechen, sind mittels einer gestrichelten Linie dargestellt. Der Überwachungsbereich 78 umschließt das Bauelement 16 und entspricht einem Aktorikbereich. Wird mittels der Erkennungseinheit 22 das Vorhandensein von menschlichem oder tierischem Gewebe im Überwachungsbereich 78 beim rotierenden Bauelement 16 erkannt, so wird, wie oben beschrieben, eine Sicherheitsmaßnahme der Aktorikeinheit 62 ausgelöst. Insbesondere wird mittels der Aktorikeinheit 62 eine Sicherheitsabschaltung der Werkzeugmaschine 10, insbesondere eine Sicherheitsabschaltung der Antriebseinheit 64, ausgelöst. Der Überwachungsbereich 76 umschließt den Überwachungsbereich 78 und setzt sich aus Punkten zusammen, die einen kleinsten Abstand zum Bauelement 16 aufweisen, der größer ist als der kleinste Abstand der Punkte des Überwachungsbereichs 78 zum Bauelement 16. Der Überwachungsbereich 76 entspricht einem Warnbereich und ist einem Warnmodus der Werkzeugmaschine 10 zugeordnet. Wird das Vorhandensein von menschlichem oder tierischem Gewebe im Überwachungsbereich 76 erkannt, so kann der Bediener mittels einer optischen und/oder akustischen Ausgabeeinheit 80 (siehe Figur 3) gewarnt werden. Ein weiterer Warnmodus erfolgt mittels der Aktorikeinheit 62, welche in Verbindung mit der Antriebseinheit 64 die Drehzahl des rotierenden Bauelements 16 ändert, so dass der Bediener auf die potentielle Gefahr durch ein Verlangsamen des Antriebs des Bauelements 16 gewarnt wird. Die Vorgehensweisen für die Überwachungsbereiche 76, 78 sind in der Datenbank 54 gespeichert.

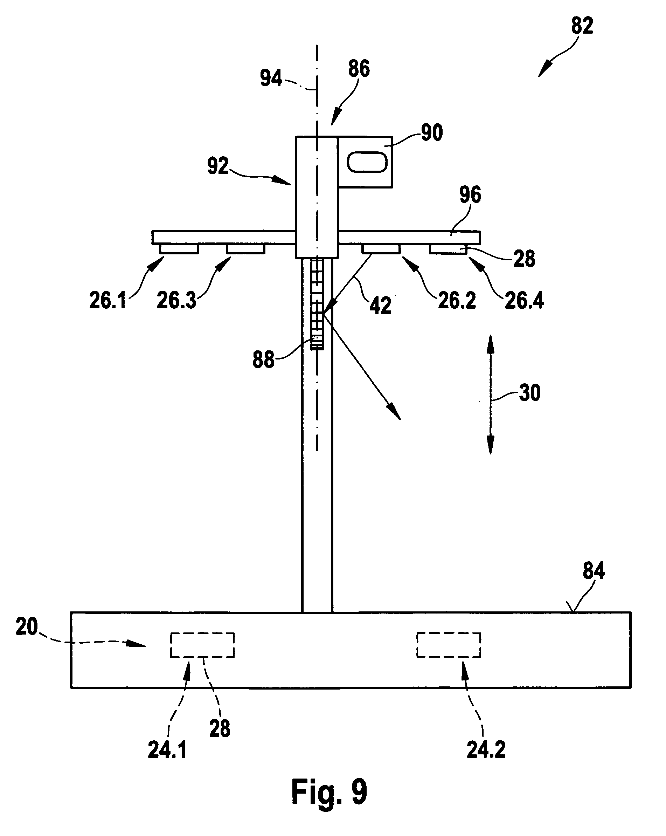

Die Werkzeugmaschinenüberwachungsvorrichtung 20 kann mit Vorteil bei weiteren stationären Werkzeugmaschinen eingesetzt werden, wie z.B. Bandsägen, Kappsägen, Hobeln usw. Ferner ist denkbar, die erfindungsgemäße Werkzeugmaschinenüberwachungsvorrichtung 20 bei einer Kapp- und Gehrungssäge, bei einer Paneelsäge, bei einer Zugsäge usw. einzusetzen. Beispielsweise wird in Figur 9 der Einsatz bei einer als Paneelsäge ausgebildeten Werkzeugmaschine 82 gezeigt. Die in Figur 9 in einer Frontansicht dargestellte Werkzeugmaschine 82 weist auf bekannte Weise eine Arbeitsfläche 84 und eine Werkzeuglagereinheit 86 zum Lagern eines als Werkzeug, und zwar als Sägeblatt, ausgebildeten Bauelements 88 auf, die relativ zur Arbeitsfläche 84 beweglich gelagert ist. Die Werkzeuglagereinheit 86 kann zur Bearbeitung eines auf der Arbeitsfläche 84 aufgelegten Werkstücks, ausgehend von einer in Figur 9 gezeigten Ruheposition, vertikal nach unten mittels einer mit der Werkzeuglagereinheit 86 festen Betätigungseinheit 90 bis zur Herstellung eines Kontakts des Bauelements 88 mit dem Werkstück gefahren werden. Die Werkzeugmaschine 82 weist ferner eine als Schutzhaube ausgebildete Schutzvorrichtung 92 zum teilweisen Bedecken des Bauelements 88 auf. Ferner ist die Werkzeugmaschine 82 mit der Werkzeugmaschinenüberwachungsvorrichtung 20 versehen. Diese weist vier Sensoren 24.1 bis 24.4 auf, die unterhalb der Arbeitsfläche 84 angeordnet sind (siehe hierzu Figur 2) und von welchen in der Figur zwei Sensoren 24.1, 24.2 zu sehen sind. Ferner sind vier Sensoren 26.1 bis 26.4 vorgesehen, die oberhalb der Arbeitsfläche 84 angeordnet sind. Die obige Beschreibung der Werkzeugmaschinenüberwachungsvorrichtung 20, insbesondere bezüglich der Anordnung der Sensoren 24, 26 relativ zur Arbeitsfläche 84 und zu einer Bewegungsebene 94, insbesondere einer Rotationsebene des Bauelements 88, bezüglich der Ausrichtung der Sende- und Empfangsrichtung 42 und der Nutzung des Bauelements 88 als Reflektor für ein Sende- oder Empfangssignal findet entsprechende Anwendung. Die Sensoren 26 sind an einer Haltevorrichtung 96 gehalten, die fest mit der Werkzeuglagereinheit 86 gelagert ist und insbesondere an der Schutzvorrichtung 92 befestigt ist. Hierbei werden die Sensoren 26 bei einer Bewegung der Werkzeuglagereinheit 86 relativ zur Arbeitsfläche 14 mitgenommen.

## Patentansprüche

1. Werkzeugmaschine mit einer Werkzeugmaschinenüberwachungsvorrichtung, die eine Erkennungseinheit (22) zur Erkennung einer Anwendungssituation der Werkzeugmaschine (10; 82) aufweist, **dadurch gekennzeichnet, dass** die Erkennungseinheit zumindest ein Bauelement (16; 88) der Werkzeugmaschine (10; 82) als Reflektorelement für ein Sende- und/oder Empfangssignal der Erkennungseinheit (22) umfasst, wobei die Sende- und/oder Empfangsrichtung (42) des Sende- und/oder Empfangssignals mit einer horizontalen Arbeitsfläche (14) der Werkzeugmaschine und mit einer vertikal ausgerichteten Bewegungsebene (36) des als Werkzeug ausgebildeten Bauelementes (16,88) einen spitzen Winkel α bzw. β bildet, wobei die Summe der Winkel α und β einem Winkel von 90° entspricht.

2. Werkzeugmaschine nach Anspruch 1, **gekennzeichnet durch** zumindest einen Ultrabreitband-Radarsensor (24, 26).

3. Werkzeugmaschine nach Anspruch 1 oder 2, **dadurch gekennzeichnet, dass** die Erkennungseinheit (22) eine Positions- und/oder Geschwindigkeitsbestimmung ermöglicht.

4. Werkzeugmaschine nach Anspruch 3, **dadurch gekennzeichnet, dass** die Positions- und/oder Geschwindigkeitsbestimmung eine Positions- und/oder Geschwindigkeitsbestimmung von menschlichem oder tierischem Gewebe ist.

5. Werkzeugmaschine nach einem der vorhergehenden Ansprüche, **dadurch gekennzeichnet, dass** das zumindest eine Bauelement (16; 88) der Werkzeugmaschine (10; 82) ein Werkstück bearbeitendes Element ist.

6. Werkzeugmaschine nach Anspruch 5, **dadurch gekennzeichnet, dass** das zumindest eine Bauelement (16; 88) der Werkzeugmaschine (10) ein Sägeblatt oder ein Sägeband ist.

7. Werkzeugmaschine nach einem der vorhergehenden Ansprüche, **dadurch gekennzeichnet, dass** die Erkennungseinheit (22) zumindest eine Antenne (28) mit einer Sende- und/oder Empfangsrichtung (42) aufweist, die auf das zumindest eine Bauelement (16; 88) gerichtet ist.

8. Werkzeugmaschine nach einem der vorhergehenden Ansprüche, **dadurch gekennzeichnet, dass** die Erkennungseinheit (22) zumindest zwei Sensoren (24, 26) aufweist, die in einer Werkzeugmaschinengrundeinbaustellung beiderseits einer Werkzeugmaschinenarbeitsfläche (14; 84) zum Platzieren eines Werkstücks angeordnet sind.

9. Werkzeugmaschine nach einem der vorhergehenden Ansprüche, **dadurch gekennzeichnet, dass** die Erkennungseinheit (22) dazu vorgesehen ist, die dielektrische Konstante zumindest eines Mediums zu ermitteln.

10. Werkzeugmaschine nach einem der vorhergehenden Ansprüche, **dadurch gekennzeichnet, dass** die Erkennungseinheit (22) dazu vorgesehen ist, durch die Reflexion des Sende- oder Empfangssignals auf ein Werkstück (74) die Werkstückdicke (d) zu ermitteln.

11. Werkzeugmaschine nach einem der vorhergehenden Ansprüche, **gekennzeichnet durch** ein Antennenarrays (34, 40).

12. Werkzeugmaschine nach Anspruch 11, **dadurch gekennzeichnet, dass** das Antennenarray (34, 40) als phasenvariables Antennenarray ausgebildet ist.

13. Werkzeugmaschine nach Anspruch 11 oder 12, **dadurch gekennzeichnet, dass** das Antennenarray (34, 40) zumindest eine Ultrabreitband-Radar-Antenne (28) aufweist.

14. Werkzeugmaschine nach einem der vorhergehenden Ansprüche, **dadurch gekennzeichnet**, das die Erkennungseinheit (22) zumindest zwei Überwachungsbereiche (76, 78) zum Überwachen eines Anwendungsprozesses der Werkzeugmaschine (10) festlegt.

15. Werkzeugmaschine nach Anspruch 14, **dadurch gekennzeichnet, dass** den Überwachungsbereichen (76, 78) jeweils ein unterschiedlicher Betriebsmodus der Werkzeugmaschine (10) zugeordnet ist.

16. Werkzeugmaschine nach Anspruch 14 oder 15, **dadurch gekennzeichnet**, das zumindest einem der Überwachungsbereiche (76) ein Warnmodus der Werkzeugmaschine (10) zugeordnet ist.

17. Werkzeugmaschine nach Anspruch 16, **dadurch gekennzeichnet, dass** die Erkennungseinheit (22) - im Zusammenwirken mit einer Werkzeugmaschinenantriebseinheit (64) zum Antreiben eines Werkzeugs - zum Verlangsamen eines Werkzeugantriebs im Warnmodus vorgesehen ist.

18. Werkzeugmaschine nach einem der Ansprüche 14 bis 17, **dadurch gekennzeichnet, dass** zumindest einem der Überwachungsbereiche (78) eine Sicherheitsabschaltung der Werkzeugmaschine (10) zugeordnet ist.

19. Werkzeugmaschine nach einem der vorhergehenden Ansprüche, **dadurch gekennzeichnet, dass** die Erkennungseinheit (22) es ermöglicht, eine Unterscheidung von menschlichem oder tierischem Gewebe einerseits und Holz oder Metall oder Kunststoffen andererseits zu treffen.

20. Werkzeugmaschine nach einem der vorhergehenden Ansprüche, **dadurch gekennzeichnet, dass** die Erkennungseinheit (22) eine Recheneinheit (50) umfasst, die dazu vorgesehen ist, die Anwendungssituation durch eine auf einer unscharfen und/oder neuronalen Logik basierende Auswertung von Kenngrößen zu erkennen.

21. Werkzeugmaschine nach einem der vorhergehenden Ansprüche, **dadurch gekennzeichnet, dass** die Erkennungseinheit (22) eine Datenbank (54) aufweist, in welcher einem Satz von Kenngrößen eine Anwendungssituation (58, 68) zugeordnet ist.

22. Verwendung eines Ultrabreitband-Radar-Sensors zur Erkennung einer Anwendungssituation bei einer Werkzeugmaschine nach Anspruch 1.

23. Verfahren zur Erkennung einer Anwendungssituation bei einem Anwendungsprozess einer Werkzeugmaschine (10;82) nach einem der vorhergehenden Ansprüche, **dadurch gekennzeichnet dass** zur Erkennung der Anwendungssituation wenigstens ein Sende- und/oder Empfangssignal einer Erkennungseinheit (22) derart ausgerichtet ist, dass ein als Werkzeug ausgebildete Reflektorelement (16,86) als Reflektor für das Sende- und/oder Empfangssignal genutzt wird.

## Claims

1. Machine tool having a machine tool monitoring apparatus which has an identification unit (22) for identification of a usage situation of the machine tool (10; 82), **characterized in that** the identification unit comprises at least one component (16; 88) of the machine tool (10; 82) as a reflector element for a transmitted and/or received signal of the identification unit (22), with the transmitting and/or receiving direction (42) of the transmitted and/or received signal forming a respective acute angle α or β with a horizontal working surface (14) of the machine tool and with a vertically aligned movement plane (36) of the component (16, 88), which is in the form of a tool, with the sum of the angles α and β corresponding to angle of 90°.

2. Machine tool according to Claim 1, **characterized by** at least one ultra-broadband radar sensor (24, 26).

3. Machine tool according to Claim 1 or 2, **characterized in that** the identification unit (22) allows position and/or speed determination.

4. Machine tool according to Claim 3, **characterized in that** the position and/or speed determination is position and/or speed determination of human or animal tissue.

5. Machine tool according to one of the preceding claims, **characterized in that** the at least one component (16; 88) of the machine tool (10; 82) is an element which processes workpieces.

6. Machine tool according to Claim 5, **characterized in that** the at least one component (16; 88) of the machine tool (10) is a saw blade or a saw ribbon.

7. Machine tool according to one of the preceding claims, **characterized in that** the identification unit (22) has at least one antenna (28) with a transmitting and/or receiving direction (42) which is directed at the at least one component (16; 88).

8. Machine tool according to one of the preceding claims, **characterized in that** the identification unit (22) has at least two sensors (24, 26) which, when the machine tool is in a basic installed position, are arranged on both sides of a machine tool working surface (14; 84) for placing a workpiece on.

9. Machine tool according to one of the preceding claims, **characterized in that** the identification unit (22) is provided in order to determine the dielectric constant of at least one medium.

10. Machine tool according to one of the preceding claims, **characterized in that** the identification unit (22) is provided in order to determine the workpiece thickness (d) by means of the reflection of the transmitted or received signal onto a workpiece (74).

11. Machine tool according to one of the preceding claims, **characterized by** an antenna array (34, 40).

12. Machine tool according to Claim 11, **characterized in that** the antenna array (34, 40) is in the form of a variable-phase antenna array.

13. Machine tool according to Claim 11 or 12, **characterized in that** the antenna array (34, 40) has at least one ultra-broadband radar antenna (28).

14. Machine tool according to one of the preceding claims, **characterized in that** the identification unit (22) defines at least two monitoring areas (76, 78) for monitoring a usage process of the machine tool (10).

15. Machine tool according to Claim 14, **characterized in that** each of the monitoring areas (76, 78) is associated with a different operating mode of the machine tool (10).

16. Machine tool according to Claim 14 or 15, **characterized in that** at least one of the monitoring areas (76) is associated with a warning mode of the machine tool (10).

17. Machine tool according to Claim 16, **characterized in that** the identification unit (22) is provided in order to slow down a tool drive in the warning mode, - in conjunction with a machine tool drive unit (64) for driving a tool.

18. Machine tool according to one of Claims 14 to 17, **characterized in that** at least one of the monitoring areas (78) is associated with a safety shut-down of the machine tool (10).

19. Machine tool according to one of the preceding claims, **characterized in that** the identification unit (22) makes it possible to distinguish between human and animal tissue on the one hand and wood, metal and plastics on the other hand.

20. Machine tool according to one of the preceding claims, **characterized in that** the identification unit (22) has a computation unit (50) which is provided in order to identify the usage situation by evaluation of characteristic variables based on fuzzy and/or neural logic.

21. Machine tool according to one of the preceding claims, **characterized in that** the identification unit (22) has a database (54), in which a set of characteristic variables are associated with a usage situation (58, 68).

22. Use of an ultra-broadband radar sensor for identification of a usage situation of a machine tool according to Claim 1.

23. Method for identification of a usage situation during a usage process of a machine tool (10; 82) according to one of the preceding claims, **characterized in that**, in order to identify the usage situation, at least one transmitted and/or received signal of an identification unit (22) is aligned such that a reflector element (16, 86), which is in the form of a tool, is used as a reflector for the transmitted and/or received signal.

## Revendications

1. Machine-outil présentant un dispositif de surveillance de machine-outil qui présente une unité de reconnaissance (22) qui reconnaît une situation d'utilisation de la machine-outil (10; 82), **caractérisée en ce que**
l'unité de reconnaissance comporte au moins un composant (16; 88) de la machine-outil (10; 82) qui sert d'élément réfléchissant pour un signal d'émission et/ou de réception de l'unité de reconnaissance (22), le dispositif (42) d'émission et/ou de réception du signal d'émission et/ou de réception formant respectivement avec une surface horizontale de travail (14) de la machine-outil et avec un plan de déplacement (36) orienté verticalement du composant (16, 88) configuré comme outil un angle aigu α ou β, la somme des angles α et β correspondant à un angle de 90°.

2. Machine-outil selon la revendication 1, **caractérisée par** au moins un détecteur radar (24, 26) à bande ultra-large.

3. Machine-outil selon les revendications 1 ou 2, **caractérisée en ce que** l'unité de reconnaissance (22) permet une détermination de position et/ou de vitesse.

4. Machine-outil selon la revendication 3, **caractérisée en ce que** la détermination de position et/ou de vitesse est une détermination de la position et/ou de la vitesse d'un tissu humain ou animal.

5. Machine-outil selon l'une des revendications précédentes, **caractérisée en ce qu'**au moins un composant (16; 88) de la machine-outil (10; 82) est un élément d'usinage d'une pièce.

6. Machine-outil selon la revendication 5, **caractérisée en ce que** le ou les composants (16; 88) de la machine-outil (10) sont une lame de scie ou un ruban de sciage.

7. Machine-outil selon l'une des revendications précédentes, **caractérisée en ce que** l'unité de reconnaissance (22) présente au moins une antenne (28) dotée d'un dispositif d'émission et/ou de réception (42) qui est orienté sur le ou les composants (16; 88).

8. Machine-outil selon l'une des revendications précédentes, **caractérisée en ce que** l'unité de reconnaissance (22) présente au moins deux détecteurs (24, 26) qui sont disposés en position de montage de base de la machine-outil des deux côtés d'une surface de travail (14; 84) de la machine-outil en vue de placer une pièce.

9. Machine-outil selon l'une des revendications précédentes, **caractérisée en ce que** l'unité de reconnaissance (22) est prévue pour déterminer la constante diélectrique d'au moins un fluide.

10. Machine-outil selon l'une des revendications précédentes, **caractérisée en ce que** l'unité de reconnaissance (22) est prévue pour déterminer l'épaisseur (d) d'une pièce par réflexion du signal d'émission ou de réception sur une pièce (74).

11. Machine-outil selon l'une des revendications précédentes, **caractérisée par** une batterie d'antenne (34, 40).

12. Machine-outil selon la revendication 11, **caractérisée en ce que** la batterie d'antenne (34, 40) est configurée comme batterie d'antenne variable en phase.

13. Machine-outil selon les revendications 11 ou 12, **caractérisée en ce que** la batterie d'antenne (34, 40) présente au moins une antenne radar (28) à bande ultralarge.

14. Machine-outil selon les revendications 11 ou 12, **caractérisée en ce que** l'unité de reconnaissance (22) définit au moins deux zones de surveillance (76, 78) pour la surveillance d'une opération d'utilisation de la machine-outil (10).

15. Machine-outil selon la revendication 14, **caractérisée en ce que** des modes de fonctionnement différents de la machine-outil (10) sont associés respectivement aux différentes zones de surveillance (76, 78).

16. Machine-outil selon les revendications 14 ou 15, **caractérisée en ce qu'**un mode d'avertissement de la machine-outil (10) est associé à au moins l'une des zones de surveillance (76).

17. Machine-outil selon la revendication 16, **caractérisée en ce que** l'unité de reconnaissance (22) est prévue pour ralentir l'entraînement de l'outil en mode d'avertissement en coopération avec l'unité (64) d'entraînement de la machine-outil qui entraîne un outil.

18. Machine-outil selon l'une des revendications 14 à 17, **caractérisée en ce qu'**un débranchement de sécurité de la machine-outil (10) est associé à au moins l'une des zones de surveillance (78).

19. Machine-outil selon l'une des revendications précédentes, **caractérisée en ce que** l'unité de reconnaissance (22) permet de distinguer d'une part des tissus humains ou animaux et d'autre part du bois, du métal ou des matières synthétiques.

20. Machine-outil selon l'une des revendications précédentes, **caractérisée en ce que** l'unité de reconnaissance (22) comporte une unité de calcul (50) prévue pour détecter la situation d'utilisation par une évaluation de grandeurs caractéristiques basées sur une logique floue et/ou une logique neuronale.

21. Machine-outil selon l'une des revendications précédentes, **caractérisée en ce que** l'unité de reconnaissance (22) présente une base de données (54) à laquelle est associé un jeu de grandeurs caractéristiques d'une situation d'utilisation (58, 68).

22. Utilisation d'un détecteur radar à bande ultralarge pour reconnaître une situation d'utilisation d'une machine-outil selon la revendication 1.

23. Procédé de reconnaissance d'une situation d'utilisation dans une opération d'utilisation d'une machine-outil (10; 82) selon l'une des revendications précédentes, **caractérisé en ce que** pour reconnaître la situation d'utilisation, au moins un signal d'émission et/ou de réception d'une unité de reconnaissance (22) est conçu de manière à ce qu'un élément réfléchissant (16, 86) configuré comme outil soit utilisé comme réflecteur du signal d'émission et/ou de réception.
